# EUROPÄISCHE PATENTSCHRIFT

(11) **EP 2 032 476 B1**
(45) Veröffentlichungstag und Bekanntmachung des Hinweises auf die Patenterteilung: **06.01.2010**
(21) Anmeldenummer: 07711396.7
(22) Anmeldetag: 27.01.2007
(51) Int. Cl.: B65G 21/20, B65G 47/08

(54) **SAMMEL- UND FÖRDERVORRICHTUNG FÜR DURCH BLATTLAGEN GEBILDETE STAPEL**
COLLECTING AND CONVEYING DEVICE FOR A STACK OF SHEETS
DISPOSITIF DE COLLECTE ET DE TRANSPORT DE PILES DE FEUILLES

(30) Priorität: 23.06.2006 DE 102006029342
(43) Veröffentlichungstag der Anmeldung: 11.03.2009
(73) Patentinhaber: bielomatik Leuze GmbH + Co. KG, 72639 Neuffen (DE)
(72) Erfinder: KLEIN, Hansjörg, 73773 Aichwald (DE); MEYER, Axel, 72574 Bad Urach-Hengen (DE)
(74) Vertreter: Thul, Hermann
(86) Internationale Anmeldenummer: PCT/EP2007/000719
(87) Internationale Veröffentlichungsnummer: WO 2007/147452

(56) Entgegenhaltungen:
- DE-A1-102004 056 018

## Beschreibung

Die Erfindung betrifft eine Sammel- und Fördervorrichtung für durch Blattlagen gebildete Stapel mit einer Sammelstation nach dem Oberbegrift des Anspruchs 1, in der aus in mehreren nebeneinander zugeförderten Schuppenströmen aus Blattlagen gleichzeitig eine entsprechende Anzahl von Blattstapeln gebildet wird, mit einem mit Abstand hinter der Sammelstation angeordneten Querförderer zum Abtransport der fertigen Blattstapel quer zur Zuförderrichtung der Blattlagen in die Sammelstation und mit einer Übergabefördereinrichtung, von der die Blattstapel von der Sammelstation auf den Querförderer transportiert werden.

Eine Sammel- und Fördervorrichtung mit diesen Merkmalen ist in der DE 10 2004 056 018 A1 beschrieben. Die Sammel- und Fördereinrichtung ist Teil einer Papierverarbeitungsmaschine, in der Papierbahnen durch Längs- und Querschneiden zu Blattlagen in einem definierten Format zugeschnitten, die entsprechenden Blattlagen zu Blattstapeln gesammelt werden, die anschließend verpackt werden.

In der Sammelstation werden die kontinuierlich in mehreren Reihen nebeneinander und in Schuppenform zugeförderten Blattlagen gesammelt, bis die Stapel jeweils die gewünschte Blattzahl erreicht haben. Die nebeneinander gebildeten Blattstapel werden von einer Übergabefördereinrichtung, die eine der Anzahl der gebildeten Stapel entsprechende Anzahl von verfahrbaren Zangen oder Schieber enthält, von der Sammelstation auf einen Querförderer gefördert. Der als Bandförderer ausgebildete Querförderer übernimmt die Reihe von nebeneinander gebildeten Stapeln und fördert sie zu nachfolgend angeordneten Packvorrichtungen, in denen die Stapel eingepackt werden.

Die Blattlagen werden der Sammelstation in der Anzahl der Nutzen entsprechenden Schuppenströmen nebeneinander und ohne Unterbrechung zugeführt. Ist die vorgegebene Anzahl von Blattlagen in dem jeweiligen Stapel erreicht, so fährt jeweils ein Trennfinger in einen Schuppenstrom und unterbricht diesen, so dass der nachfolgende Schuppenstrom auf den jeweiligen Trennfingern vorgesammelt wird bis die fertigen Stapel abtransportiert und die Sammelstation wieder frei ist. Entsprechend muss auch der Übernahmebereich des Querförderers durch schnellen Abtransport der Stapel wieder frei gemacht werden, bevor die nächste Reihe von Stapeln von der Übergabefördereinrichtung antransportiert wird.

Mit den bekannten Querförderern können die Blattstapel nur mit relativ geringer Beschleunigung aus dem Bereich der Sammelstation quer abtransportiert werden. Beim Sammeln der Blattlagen zu Stapeln verbleibt Luft zwischen den einzelnen Lagen. Die Stapel sind daher wenig stabil. Bei zu starker Beschleunigung verrutschen die einzelnen Blattlagen, so dass die Stapelform leidet oder gar der gesamte Stapel unbrauchbar und damit auch die Produktion gestört wird.

Da die verbleibende Luft zwischen den Lagen in den Blattstapeln auch in den nachfolgenden Prozessen Probleme im Hinblick auf die Stapelform und Verpackungsqualität bereitet, ist es bekannt, in oder hinter der Sammelstation Luftauspressstationen anzuordnen. Die EP 0 751 086 B1 beschreibt eine Luftauspressstation hinter der Sammelstation, die EP 1 568 639 A1 beschreibt eine Ausführungsform, bei dem eine Luftpressstation am Trennfinger der Sammelstation angebaut ist. Ebenso ist es bekannt, zur Vermeidung der vorstehend beschriebenen Nachteile die Stapel während der Übergabe zu dem Querförderer oder beim Abtransport durch den Querförderer elektrostatisch aufzuladen.

Die bekannten Lösungen mit Luftauspressstationen erlauben nur eine beschränkte Erhöhung der Taktzahl in der Sammel- und Fördervorrichtung. Die Wirksamkeit von elektrostatischen Aufladungen sind sehr stark vom Material und der Umgebung abhängig und daher nicht genügend zuverlässig.

Der Erfindung liegt daher die Aufgabe zugrunde, eine Sammel- und Fördervorrichtung der gattungsgemäßen Art so zu verbessern, dass sie in der Lage ist, mit sehr hoher Taktzahl und ohne Störungen oder Beeinträchtigungen der Stapelqualität die Blattstapel aus dem Bereich der Sammelstation abzutransportieren.

Diese Aufgabe wird dadurch gelöst, dass neben dem Querförderer ein synchron mit diesem über eine gewisse Strecke verfahrbarer Wagen angeordnet ist, an dem eine Reihe von Niederhaltern befestigt ist, die auf die auf dem Querförderer befindlichen Stapel absenkbar sind.

Mittels der Niederhalter können die Stapel zumindest zu Beginn des Quertransports auf dem Querförderer fixiert werden. Der Querförderer kann daher beim Abtransport mit bedeutend höheren Werten beschleunigt werden. Daher sind die Niederhalter für die Stapel zumindest während der Beschleunigungsphase des Querförderers aktiv. Sie sind dazu an einem verfahrbaren Wagen befestigt, der synchron mit dem Querförderer beschleunigt wird. Die Taktzahl der Sammel- und Fördervorrichtung lässt sich deutlich erhöhen, da die Blattstapel auf dem Querförderer sicher eingespannt beschleunigt werden.

Die Erfindung hat den weiteren großen Vorteil, dass beim Auflegen der Niederhalter auf die Stapel die Luft zwischen den Blattlagen ausgepresst wird. Die Niederhalter lassen sich vorteilhaft so großflächig gestalten und mit ausreichender Kraft von oben auf den Stapel auflegen, dass die Blattstapel beim Abtransport während der Beschleunigungsphase sicher auf dem Querförderer fixiert sind und zugleich die Luft aus den Blattstapeln sicher ausgepresst wird. Bei gleicher Taktzahl können die Presszeiten zum Auspressen der Luft verlängert werden, da während des Transports der Stapel gepresst werden kann

Als weiterer Vorteil tritt hinzu, dass die erfindungsgemäße Lösung auch bei Ausführungsformen mit "Doppelauslauf" einsetzbar ist. Bei einem Doppelauslauf besteht der Querförderer aus zumindest zwei Einzelförderern, die Stapel in beide Richtungen quer abtransportieren können. Eine derartige Ausführung ist in der DE 10 2004 056 018 A1 beschrieben. Bei einem "Doppelauslauf" wird jedem der beiden entgegengesetzt quer abfördernden Einzelförderern jeweils ein synchron beschleunigbarer Wagen mit daran befestigten Niederhaltern zugeordnet.

Ein weiterer Vorteil besteht darin, dass aufgrund der sehr hohen Anfangsbeschleunigung Zeit gewonnen wird, um die Stapel anschließend verlangsamt auf die geforderte nachfolgende Transportgeschwindigkeit wieder zu verzögern. Diese Verzögerung erfolgt außerhalb des Bereichs der Sammelstation und außerhalb des Bewegungsbereichs der Niederhalter, die daher bei der Verzögerung nicht auf den Stapeln aufliegen. Da die Verzögerung sehr viel geringer gewählt werden kann, besteht keine Gefahr, dass die Blattlagen innerhalb der Stapel verrutschen und so Störungen auftreten oder die Stapelqualität beeinträchtigt wird.

Die Übergabefördereinrichtung enthält bevorzugt ein oder zwei Zangenwagen, wie sie in der DE 10 2004 056 018 A1 beschrieben sind. Die Niederhalter erstrecken sich ebenso wie die Zangen der Zangenwagen in die Richtung, mit der die Blattlagen in die Sammelstation gefördert werden. Diese Richtung wird als Produktlaufrichtung (PLR) bezeichnet.

Nachfolgend wird die Erfindung anhand zweier Ausführungsbeispiele näher erläutert.

Die Figuren 1 bis 6 zeigen eine "Single-Ausführung", bei der ein Querförderer die Stapel in nur eine Richtung quer abfördert.

Die Figuren 7 bis 10 zeigen einen "Doppelauslauf", bei der ein aus zumindest zwei Einzelförderern bestehender Querförderer Stapel in beide Richtungen quer zur Produktlaufrichtung abtransportiert.

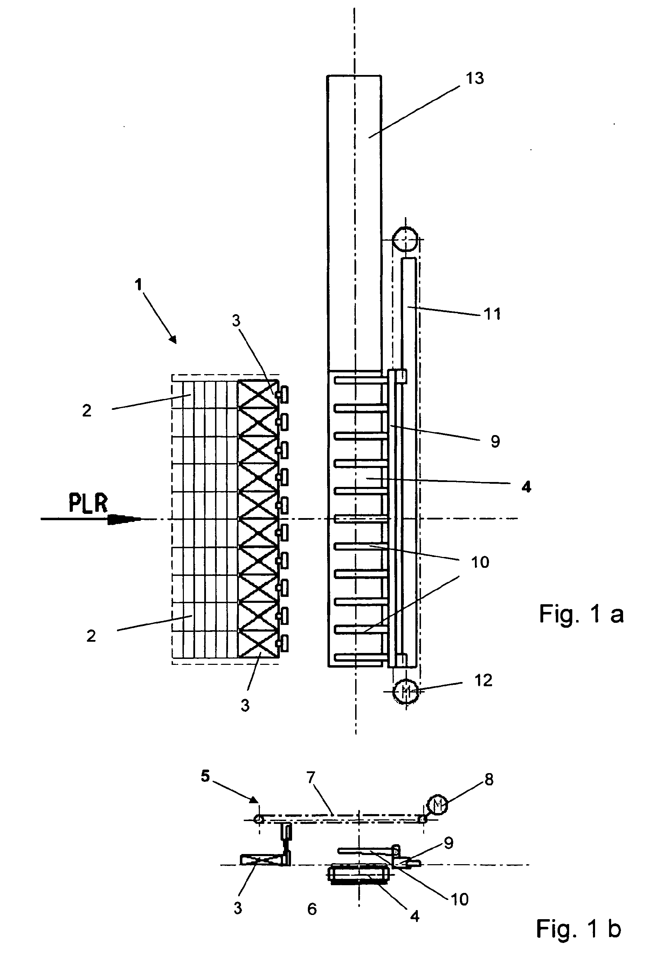

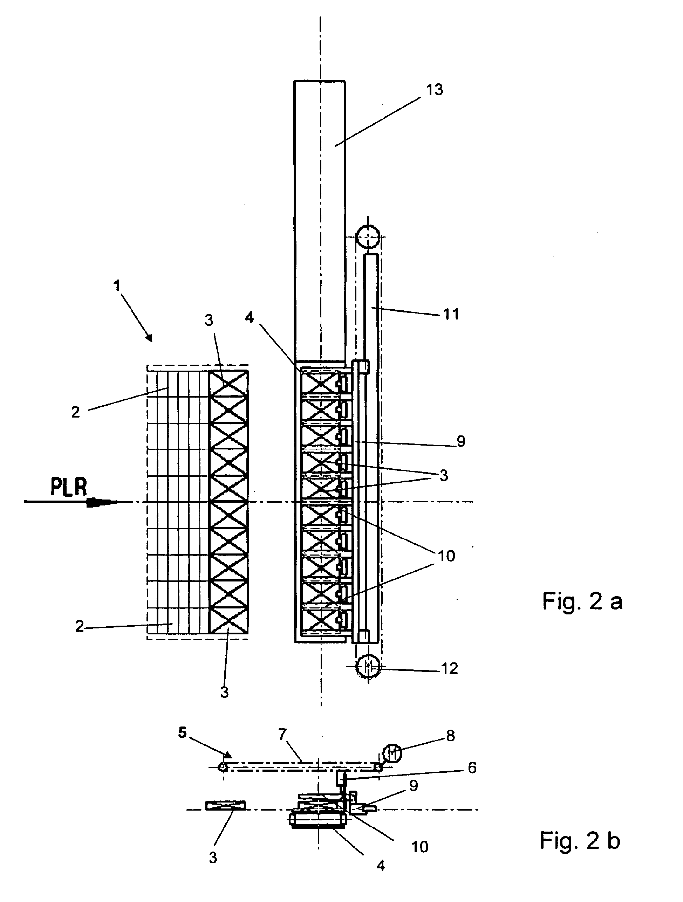

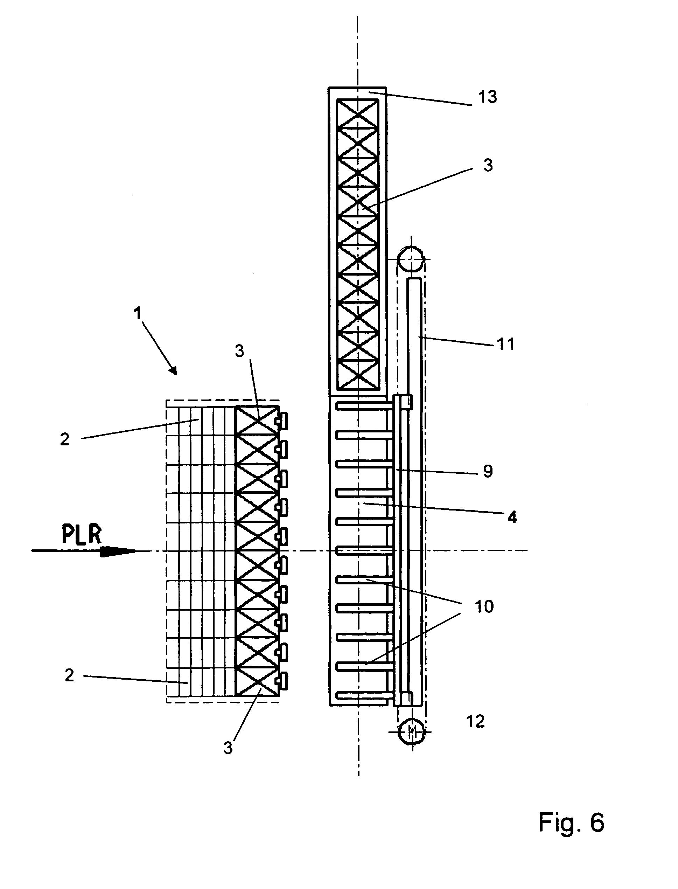

Alle in den Figuren dargestellten Ausführungsformen einer Sammel- und Fördervorrichtung sind Teil einer Papierverarbeitungsmaschine, in der Papierbahnen durch Längs- und Querschneiden zu Blattlagen in einem definierten Format zugeschnitten und die entsprechenden Blattlagen zu Blattstapeln gesammelt werden, die anschließend verpackt werden. Die Sammel- und Fördereinrichtung enthält eine Sammelstation 1, der die Blattlagen in Schuppenströmen 2 parallel nebeneinander und ohne Unterbrechung in der Produktlaufrichtung PLR zugeführt werden und zu Blattstapeln 3 gesammelt werden. In den Ausführungsbeispielen werden aus zehn Schuppenströmen 2 zehn Blattstapel 3 gebildet. Mit Abstand hinter der Sammelstation 1 ist ein Querförderer 4 angeordnet, von dem die fertigen Blattstapel 3 quer zur Produktlaufrichtung PLR zu einer nicht dargestellten Packstation abgefördert werden. Der Querförderer 4 ist bevorzugt ein Bandförderer, der nach der Ausführungsform nach den Figuren 1 bis 6 in der "Single-Ausführung" die Stapel 3 in nur eine Richtung (in Figur 1a nach oben) abfördert. Eine Übergabefördereinrichtung 5, die in der Seitenansicht nach Figur 1b deutlicher dargestellt ist, dient dazu, die fertigen Blattstapel 3 von der Sammelstation 1 auf den Querförderer 4 zu transportieren. Die Übergabefördereinrichtung 5 enthält einen Zangenwagen 6 mit einer der Anzahl der nebeneinander gebildeten Blattstapel 3 entsprechende Anzahl von Zangen, der an einem umlaufenden, sich von der Sammelstation 3 bis über den Querförderer 4 erstreckenden Riemen 7 befestigt ist. Der Riemen 7 wird von einem elektrischen Motor 8 angetrieben, so dass der daran befestigte Zangenwagen 6 von der Sammelstation 3 bis über den Querförderer 4 und wieder zurück bewegt werden kann. Eine derartige Sammel- und Fördervorrichtung ist in der DE 10 2004 056 018 A1 beschrieben.

Nach der Erfindung ist im Bereich der Sammelstation 3 neben dem Querförderer 4 ein synchron mit diesem über eine gewisse Strecke verfahrbarer Wagen 9 angeordnet, an dem eine Reihe von Niederhaltern 10 befestigt ist, die auf die auf dem Querförderer 4 befindlichen Stapel 3 absenkbar sind, um diese zumindest bei Beginn des Quertransports auf dem Querförderer 4 zu fixieren. Der Wagen 9 ist auf einer sich parallel neben dem Querförderer 4 erstreckenden Führungsschiene 11 mittels eines Antriebs 12 von seiner in Figur 1 a dargestellten Ausgangsposition über eine gewisse Strecke verfahrbar. Der bevorzugt als elektrischer Servomotor ausgebildete Antrieb 12 des Wagens 10 ermöglicht es, den Wagen 9 synchron mit dem Querförderer 4 zu beschleunigen. Bevorzugt ist der Wagen 9 mit den Niederhaltern 10 in Produktlaufrichtung hinter dem Querförderer 4 angeordnet. Die Niederhalter 10 sind mit Abstand voneinander und sich gegen Produktlaufrichtung erstreckend hoch- und niederschwenkbar befestigt. Bevorzugt sind die Niederhalter 10 über die Länge des Wagens 9 versetzt zu den Zangen des Zangenwagens 6 angeordnet. In der Ausgangsposition des Wagens 9 können so die Zangen ohne Behinderung zwischen die Niederhalter 10 bewegt werden. Damit jeder Stapel 3 von Niederhaltern 10 fixiert werden kann, entspricht die Länge des Wagens 9 der Breite der Sammelstation 1, und eine ausreichende Anzahl von Niederhaltern 10 ist über die Länge des Wagens 9 angeordnet. Bevorzugt sind die Niederhalter 10 an dem Wagen 9 verstellbar befestigt, um ihre Position verschiedenen Stapelformaten anpassen zu können. Unmittelbar an den Querförderer 4 und mit diesem fluchtend schließt sich ein Stauförderer 13 an, von dem die Stapel 3 einer nachfolgenden Packstation zugeführt werden.

Der Ablauf eines Abtransports der Stapel 3 ist in den Figuren 1 bis 6 dargestellt:

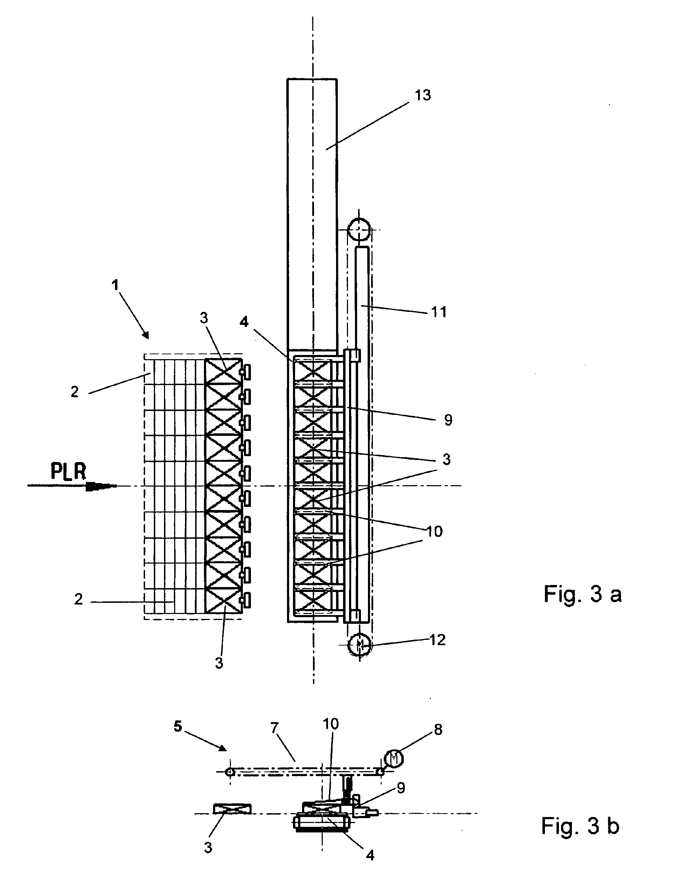

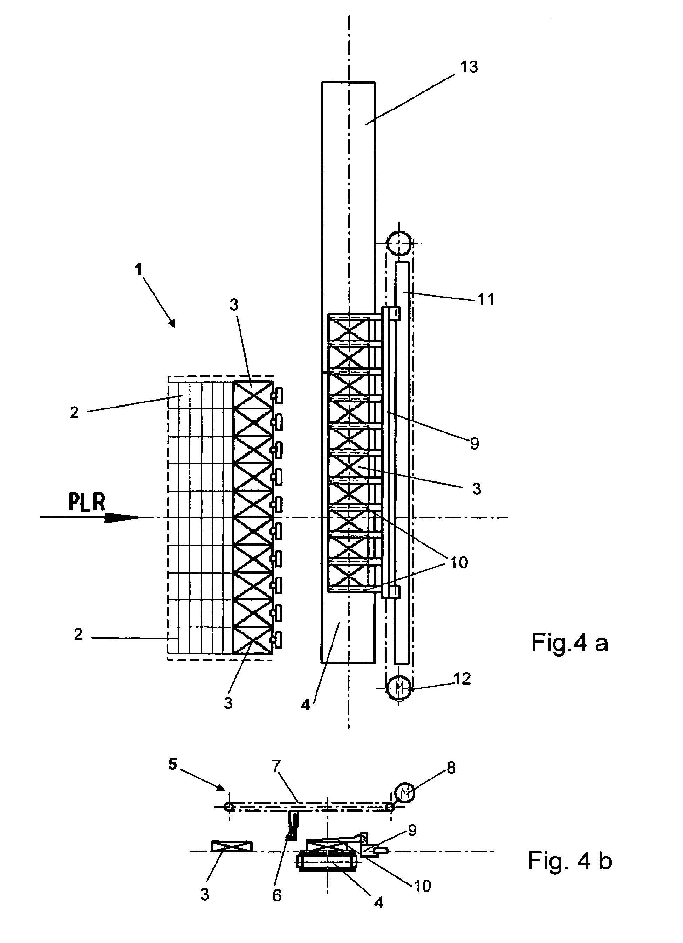

In Figur 1a, b ist die Ausgangsposition dargestellt. Die soeben fertig gestellten Stapel 3 werden von dem Zangenwagen 6 übernommen. Der Wagen 9 mit den Niederhaltern 10 befindet sich in der Ausgangsposition, in der die Niederhalter 10 auf die Kanten der Stapel 3 ausgerichtet und hochgeschwenkt sind. Die fertigen Stapel 3 werden anschließend von dem Zangenwagen 6 auf den Querförderer 4 transportiert. In der Sammelstation 1 werden bereits neue Stapel 3 gebildet. Anschließend werden die Zangen des Zangenwagens 6 gelöst und die Niederhalter 10 werden auf die Stapeloberseiten abgesenkt. Dabei werden die Stapel 3 auf den Querförderer 4 fixiert. Zugleich wird die Luft aus den Stapeln 3 gepresst (Figur 3). Nach dem der Zangenwagen 6 wieder in seine Warteposition vor der Sammelstation 1 gefahren ist (Figur 4b), wird der Querförderer 4 synchron mit dem Stauförderer 3 und dem Wagen 9 beschleunigt, dabei halten die Niederhalter 10 die Stapel 3 sicher auf den Förderern 4, 13.

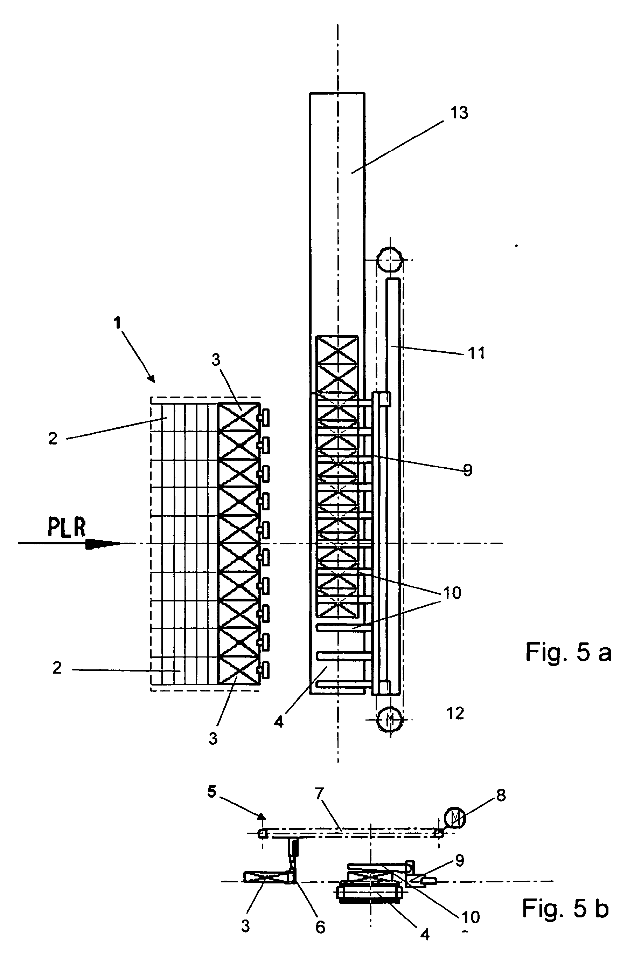

Sobald die Stapel 3 maximal beschleunigt sind, heben die Niederhalter 10 wieder ab, und der Niederhalterwagen 9 kehrt in seine Ausgangsposition zurück (Figur 5). Während der Hin- und Rückfahrt des Wagens 9 befindet sich der Zangenwagen 6 außerhalb des Kollisionsbereichs des Niederhalterwagens 9 (Figur 4b, 5b). Anschließend befinden sich alle Stapel 3 auf dem Stauförderer 13. Der Wagen 9 mit den hoch geschwenkten Niederhaltern 10 befindet sich in seiner Ausgangsposition, in der der Querförderer 4 erneut von dem Zangenwagen 6 mit neuen Stapeln 3 beschickt werden kann.

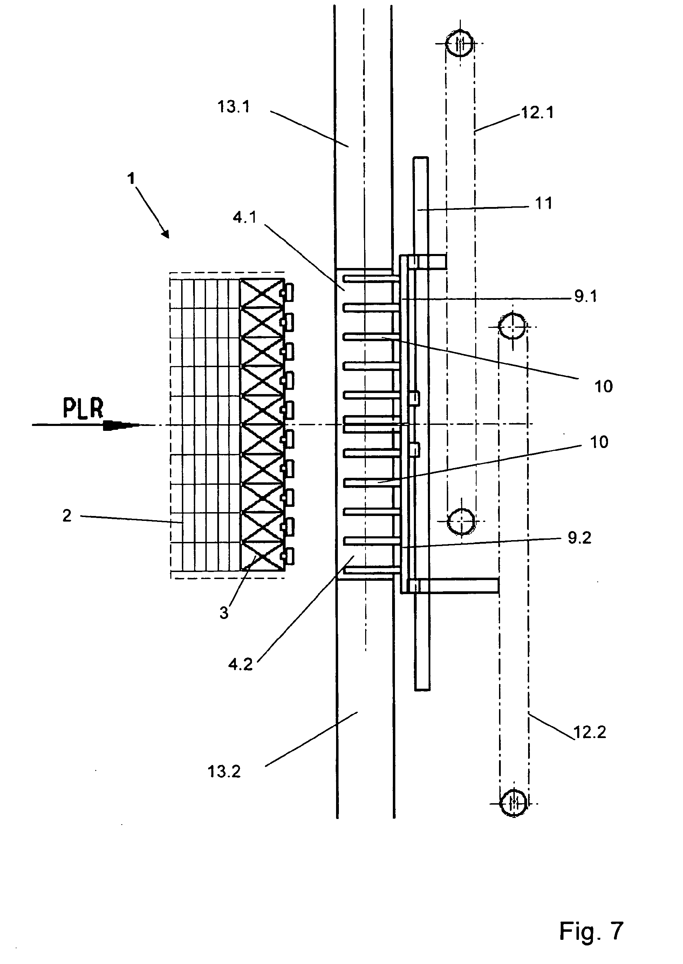

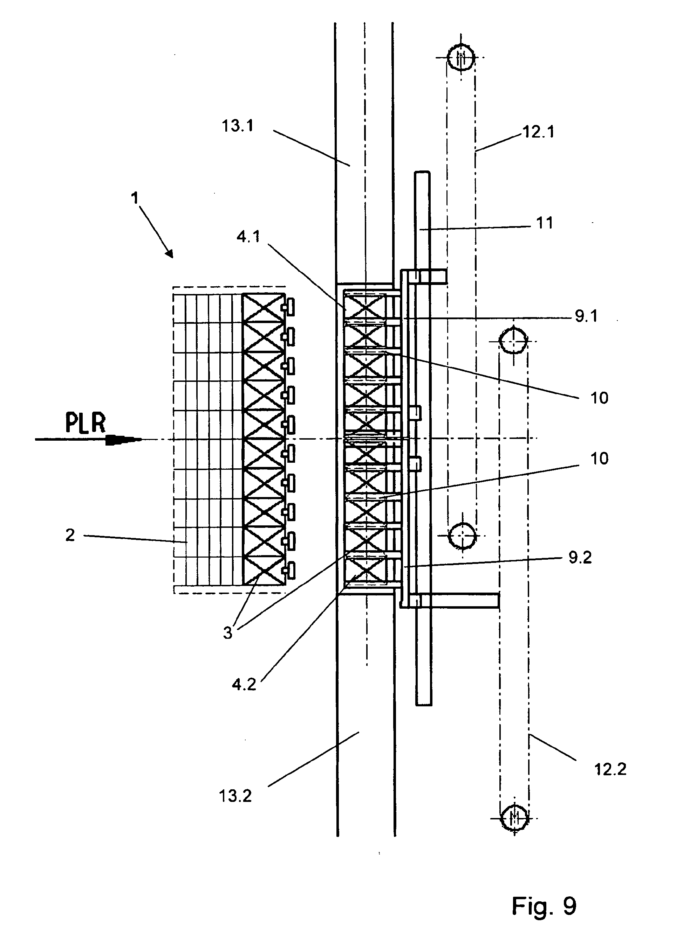

In den Figuren 7 bis 10 ist ein "Doppelauslauf" dargestellt, deren Querförderer 4 zur Beschleunigung des Abtransports Stapel 3 in beide Richtungen quer zur Produktlaufrichtung abtransportiert.

Der Querförderer 4 besteht aus zwei Einzelförderern 4.1, 4.2, von denen ein Förderer 4.1 nach links (in Figur 7 nach oben), der andere Einzelförderer 4.2 die Stapel 3 nach rechts (in Figur 7 nach unten) abtransportiert. Die beiden Förderer 4.1, 4.2 sind zueinander fluchtend so angeordnet, dass jeder bis in die Maschinenmitte reicht. So übernimmt jeder Förderer 4.1, 4.2 jeweils die Hälfte der in der Sammelstation 1 gebildeten Stapel; im Ausführungsbeispiel jeweils fünf.

Alternativ ist es auch möglich, Einzelförderer hintereinander anzuordnen, denen jeweils ein Zangenwagen einen Teil der Stapel zufördert. Eine derartige Ausführungsform ist in der DE 10 2004 056 018 A1 beschrieben.

Damit die auf jedem Einzelförderer 4.1, 4.2 abtransportierten Stapel 3 während der Beschleunigungsphase fixiert werden können, sind hinter den Förderern 4.1, 4.2 zwei Wagen 9.1, 9.2 mit Niederhaltern 10 angeordnet. Jeder Wagen 9.1, 9.2 weist einen eigenen Antrieb 12.1, 12.2 auf, der es ermöglicht, ihn mit seinem zugehörigen Querförderer 4.1, 4.2 synchron von der Maschinenmitte nach außen zu bewegen. Beide Wagen 9.1, 9.2 sind an einer Führungsschiene 11 verfahrbar gelagert, die sich parallel zu den Querförderern 4.1, 4.2 erstreckt. Ansonsten ist die Sammel- und Fördervorrichtung nach den Figuren 7 bis 10 entsprechend der Ausführungsform nach den Figuren 1 bis 6 aufgebaut. Übereinstimmende Komponenten sind daher mit übereinstimmenden Bezugszeichen bezeichnet.

In Figur 7 ist die Ausgangsposition dargestellt, in der die Stapel 3 soeben fertig gestellt wurden. Die an den Wagen 9.1, 9.2 schwenkbar gelagerten Niederhalter 10 sind hoch geschwenkt, damit die fertigen Stapel 3 auf die Querförderer 4.1, 4.2 von einem nicht dargestellten Zangenwagen auf die Querförderer 4.1, 4.2 transportiert werden können. Da die Grenze zwischen den beiden Förderern 4.1, 4.2 in der Maschinenmitte verläuft, wird jeweils die Hälfte der Stapel 3 auf einen der beiden Förderer 4.1, 4.2 gesetzt. Die Wagen 9.1, 9.2 sind so positioniert, dass sie in der Maschinenmitte aneinander stoßen.

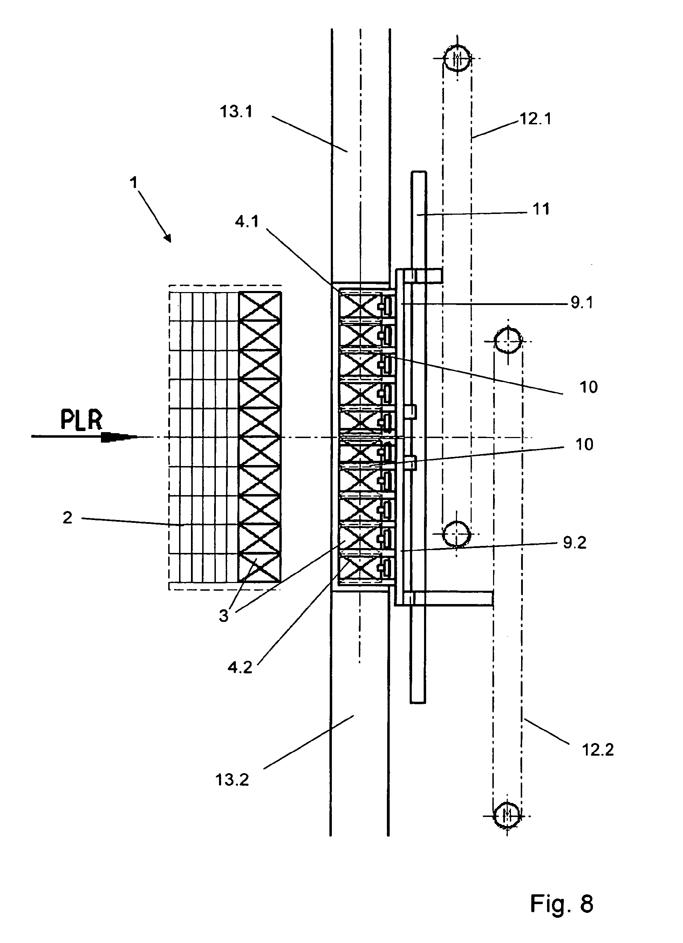

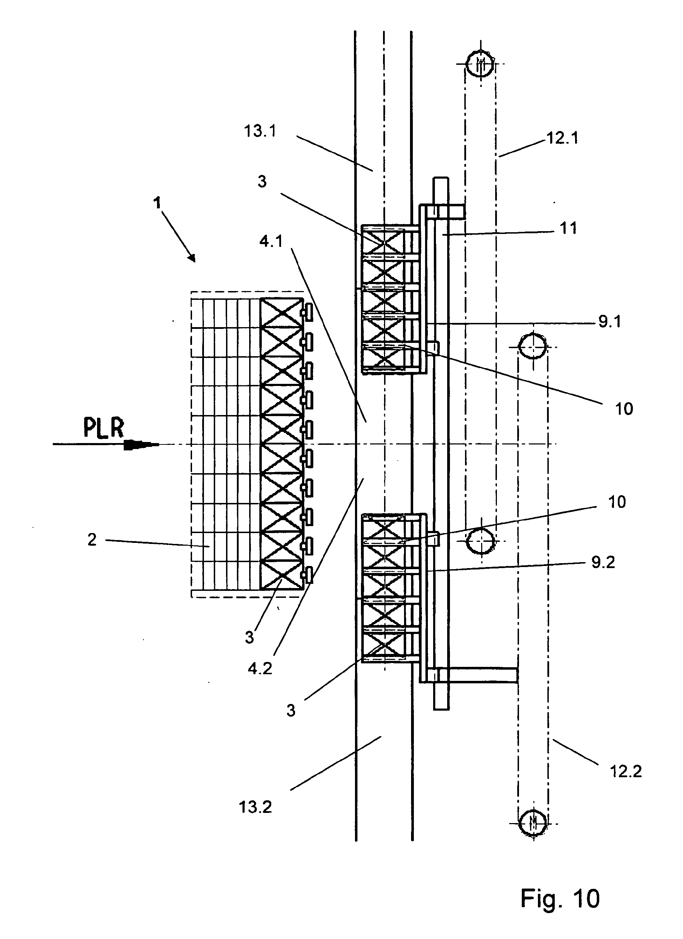

Nachdem der Zangenwagen die Stapel auf die Querförderer 4.1, 4.2 bewegt hat (Figur 8), werden die Niederhalter 10 auf die Stapel 3 abgeschwenkt, um diese zu fixieren und die Luft auszupressen. Währenddessen wird der Zangenwagen in seine Warteposition vor der Sammelstation 1 bewegt, in der er sich außerhalb des Verfahrwegs der Wagen 9.1, 9.2 mit den Niederhaltern befindet, so dass Kollisionen mit diesem vermieden werden. Anschließend werden die Stapel 3 synchron nach beiden Richtungen von den Querförderern 4.1, 4.2 auf die Staubänder 13 abtransportiert (Figur 10). Mit jedem Querförderer 4.1, 4.2 wird der zugehörige Wagen 9.1, 9.2 synchron beschleunigt, so dass die Stapel 3 sicher von Niederhaltern 10 gehalten werden.

## Patentansprüche

1. Sammel- und Fördervorrichtung für durch Blattlagen gebildete Stapel (3) mit einer Sammelstation (1), in der aus mehreren nebeneinander zugeförderten Schuppenströmen (2) aus Blattlagen gleichzeitig eine entsprechende Anzahl von Blattstapeln (3) gebildet wird, mit einem mit Abstand hinter der Sammelstation (1) angeordneten Querförder (4) zum Abtransport der fertigen Blattstapel (3) quer zur Zuförderrichtung der Blattlagen in die Sammelstation (1) und mit einer Übergabefördereinrichtung (5) von der die Blattstapel (3) von der Sammelstation (1) auf den Querförderer (4) transportiert werden, **dadurch gekennzeichnet, dass** neben dem Querförderer (4) ein synchron mit diesem über eine gewisse Strecke verfahrbarer Wagen (9) angeordnet ist, an dem eine Reihe von Niederhaltern (10) befestigt ist, die auf die auf dem Querförderer (4) befindlichen Stapel (3) absenkbar sind.

2. Sammel- und Fördervorrichtung nach Patentanspruch 1, **dadurch gekennzeichnet, dass** die Übergabefördereinrichtung (5) zumindest einen Zangenwagen (6) zum Transport der Stapel (3) enthält.

3. Sammel- und Fördervorrichtung nach Anspruch 1 oder 2, **dadurch gekennzeichnet, dass** der Wagen (9) mit den Niederhaltern (10) mittels eines elektrischen Servomotors verfahrbar ist.

4. Sammel- und Fördervorrichtung nach einem der Ansprüche 1 bis 3, **dadurch gekennzeichnet, dass** der Querförderer (4) aus zumindest zwei Einzelförderern (4.1, 4.2) besteht, die Stapel (3) in beide Richtungen abtransportieren, und dass jedem Einzelförderer (4.1, 4.2) ein eigener Wagen (9.1, 9.2) mit Niederhaltern (10) zugeordnet ist, der synchron mit dem jeweiligen Einzelförderer (4.1, 4.2) verfahrbar ist.

## Claims

1. Collecting and conveying apparatus for stacks (3) of sheets, having a collecting station (1) in which a plurality of imbricated streams (2) of sheets which are supplied one beside the other are used to form a corresponding number of sheet stacks (3) simultaneously, having a transverse conveyor (4) which is arranged at a distance downstream of the collecting station (1) and is intended for removing the finished sheet stacks (3) into the collecting station (1) in a direction transverse to the direction in which the sheets are supplied, and having a transfer conveyor (5) by means of which the sheet stacks (3) are transported from the collecting station (1) onto the transverse conveyor (4), **characterized in that** arranged alongside the transverse conveyor (4) is a carriage (9) which can be displaced over a certain distance synchronously with the transverse conveyor and on which is fastened a series of holding-down means (10) which can be lowered onto the stacks (3) located on the transverse conveyor (4).

2. Collecting and conveying apparatus as claimed in Patent Claim 1, **characterized in that** the transfer conveyor (5) contains at least one gripper carriage (6) for transporting the stacks (3).

3. Collecting and conveying apparatus as claimed in Claim 1 or 2, **characterized in that** the carriage (9) with the holding-down means (10) can be displaced by means of an electric servomotor.

4. Collecting and conveying apparatus as claimed one of Claims 1 to 3, **characterized in that** the transverse conveyor (4) comprises at least two individual conveyors (4.1, 4.2) which remove the stacks (3) in both directions, and **in that** each individual conveyor (4.1, 4.2) is assigned a dedicated carriage (9.1, 9.2), with holding-down means (10), which can be displaced synchronously with respect to the individual conveyor (4.1, 4.2).

## Revendications

1. Dispositif de collecte et de transport pour des piles (3) formées par des couches de feuilles, avec un poste de collecte (1) dans lequel est formé simultanément un nombre correspondant de piles de feuilles (3) à partir de plusieurs flux imbriqués (2) acheminés les uns à côté des autres constitués de couches de feuilles, avec un transporteur transversal (4) disposé à une certaine distance derrière le poste de collecte (1) pour évacuer les piles de feuilles finies (3) transversalement à la direction d'entrée des couches de feuilles dans le poste de collecte (1) et avec un dispositif transporteur de transfert (5) depuis lequel les piles de feuilles (3) sont transportées du poste de collecte (1) au transporteur transversal (4), **caractérisé en ce que** l'on dispose à côté du transporteur transversal (4) un chariot (9) déplaçable de manière synchronisée avec celui-ci sur une certaine distance, sur lequel est fixée une rangée de dispositifs de maintien vers le bas (10) qui peuvent être abaissés sur la pile (3) se trouvant sur le transporteur transversal (4).

2. Dispositif de collecte et de transport selon la revendication 1, **caractérisé en ce que** le dispositif transporteur de transfert (5) contient au moins un chariot à pinces (6) pour le transport des piles (3).

3. Dispositif de collecte et de transport selon la revendication 1 ou 2, **caractérisé en ce que** le chariot (9) peut être déplacé avec les dispositifs de maintien vers le bas (10) au moyen d'un servomoteur électrique.

4. Dispositif de collecte et de transport selon l'une quelconque des revendications 1 à 3, **caractérisé en ce que** le transporteur transversal (4) se compose d'au moins deux transporteurs individuels (4.1, 4.2) qui évacuent les piles (3) dans deux directions, et **en ce que** l'on associe à chaque transporteur individuel (4.1, 4.2) un chariot propre (9.1, 9.2) avec des dispositifs de maintien vers le bas (10), lequel peut être déplacé de manière synchronisée avec le transporteur individuel respectif (4.1, 4.2).
